# EUROPEAN PATENT APPLICATION

(11) **EP 0 961 239 A2**
(43) Date of publication of application: **01.12.1999**
(21) Application number: 99107280.2
(22) Date of filing: 14.04.1999
(51) Int. Cl.: G07D 7/00

(54) **Digital watermarking and banknotes**

(30) Priority: 16.04.1998 US 82228 P; 06.05.1998 US 74034
(71) Applicant: Digimarc Corporation, Lake Oswego, OR 97035 (US)
(72) Inventor: Rhoads, Geoffrey B., West Linn Oregon 97068 (US)
(74) Representative: Meddle, Alan Leonard

(57) **Abstract**

Machine-readable data is digitally watermarked into banknotes. Such watermarking can be optically sensed and detected by various devices. In response, such devices can intervene to prevent banknote reproduction. This arrangement addresses various problems, e.g., the use of digital image editing tools to circumvent prior art banknote anti-copy systems. In some embodiments, visible structures characteristic of banknotes are also detected (e.g. by pattern recognition analysis of image data), and reproduction can be halted if either the visible structures or the digital watermark data are detected. In other embodiments, automatic teller machines that accept, as well as dispense, banknotes can check for the presence of digitally watermarked data to help confirm the authenticity of banknotes. In other embodiments, scanners, printers and photocopiers can be provided with digital watermarking capabilities so that image data, or printed output, produced by such devices includes digital watermark data, permitting subsequent identification of the particular device used. The digital watermarking can be effected by making slight alterations to ink color, density, etc., or by texturing the microtopology of the banknote surface. Some embodiments effect the watermarking by modulating the width or placement of component lines that form line art imagery on the banknote.

## Description

### Field of the Invention

The present application relates to the use of digital watermarking in connection with banknotes and other security documents.

### Background and Summary of the Invention

The problem of casual counterfeiting of banknotes first arose two decades ago, with the introduction of color photocopiers. A number of techniques were proposed to address the problem.

U.S. Patent 5,659,628 (assigned to Ricoh) is one of several patents noting that photocopiers can be equipped to recognize banknotes and prevent their photocopying. The Ricoh patent particularly proposed that the red seal printed on Japanese yen notes is a pattern well suited for machine recognition. U.S. Patents 5,845,008 (assigned to Omron), and 5,724,154 and 5,731,880 (both assigned to Canon) show other photocopiers that sense the presence of the seal emblem on banknotes, and disable a photocopier in response. U.S. Patent 5,678,155 (assigned to Sharp) notes that a great number of other features visible on banknotes (e.g. logos, stamps, signets, face values, symbols including $ and YEN, etc.) can similarly be used as the basis for banknote recognition.

Other technologies proposed that counterfeiting might be deterred by uniquely marking the printed output from each color photocopier, so that copies could be traced back to the originating machine. U.S. Patent 5,568,268, for example, discloses the addition of essentially imperceptible patterns of yellow dots to printed output; the pattern is unique to the machine. U.S. Patent 5,557,742 discloses a related arrangement in which the photocopier's serial number is printed on output documents, again in essentially imperceptible form (small yellow lettering). U.S. Patent 5,661,574 shows an arrangement in which bits comprising the photocopier's serial number are represented in the photocopier's printed output by incrementing, or decrementing, pixel values (e.g. of yellow pixels) at known locations by fixed amounts (e.g. +/-30), depending on whether the corresponding serial number bit is a "1" or a "0."

Recent advances in personal computers, and color scanning and printing technologies, have greatly increased the level of casual counterfeiting. High quality scanners are now readily available to many computer users, with 300 dpi scanners available for under $100, and 600 dpi scanners available for marginally more. Similarly, photographic quality color ink-jet printers are commonly available from Hewlett-Packard Co., Epson, etc. for under $300.

These tools pose new threats. For example, a banknote can be doctored (e.g. by white-out, scissors, or less crude techniques) to remove/obliterate the visible patterns on which prior art banknote detection techniques relied to prevent counterfeiting. Such a doctored document can then be freely scanned or copied, even on photocopiers designed to prevent processing of banknote images. The removed pattern(s) can then be added back in, e.g. by use of digital image editing tools, permitting free reproduction of the banknote.

Digital watermarking technologies provide novel ways to address the problem of counterfeiting -- overcoming many of the newly-emerging threats and providing other advantages not previously available.

Digital watermarking (sometimes simply "watermarking") is a quickly growing field of endeavor, with several different approaches. The present assignee's work is reflected in U.S. Patents 5,841,978, 5,768,426, 5,748,783, 5,748,763, 5,745,604, 5,710,834, 5,636,292, 5,721,788, and in laid-open PCT applications WO 95/14289, WO 96/36163, and WO97/43736.

Applicant's laid-open application WO 95/14289 discloses a system for redundantly embedding plural bit codes in various electronic and physical media using noise-like signals, and notes that the invention may be applied to paper currency. One embodiment alters the micro-topology of the surface of a medium to effect encoding. Another embodiment is a scanner that embeds identification codes in its scanned output data.

Applicant's laid-open application WO 96/36163 discloses a reproduction kiosk for use in retail photography stores, permitting consumers to reproduce photographs. The kiosk examines the consumer's photograph for embedded watermark data (e.g. indicating that the photograph is copyrighted), and interrupts reproduction of the photograph if such watermark data is detected. This application also discloses that information can be encoded in vector graphics and very-low-order bit-mapped graphics by slightly changing a line's contour, e.g. slightly up, down, left or right.

Other digital watermarking work is illustrated by U.S. Patents 5,734,752, 5,646,997, 5,659,726, 5,664,018, 5,671,277, 5,687,191, 5,687,236, 5,689,587, 5,568,570, 5,572,247, 5,574,962, 5,579,124, 5,581,500, 5,613,004, 5,629,770, 5,461,426, 5,743,631, 5,488,664, 5,530,759,5,539,735, 4,943,973, 5,337,361, 5,404,160, 5,404,377, 5,315,098, 5,319,735, 5,337,362, 4,972,471, 5,161,210, 5,243,423, 5,091,966, 5,113,437, 4,939,515, 5,374,976, 4,855,827, 4,876,617, 4,939,515,4,963,998,4,969,041, and published applications WO 98/02864, EP 822,550, WO 97/39410, WO 96/36163, GB 2,196,167, EP 777,197, EP 736,860, EP 705,025, EP 766,468, EP 782,322, WO 95/20291, WO 96/26494, WO 96/36935, WO 96/42151, WO 97/22206, WO 97/26733. Some of the foregoing patents relate to visible watermarking techniques. Other visible watermarking techniques (e.g. data glyphs) are described in U.S. Patents 5,706,364, 5,689,620, 5,684,885, 5,680,223, 5,668,636, 5,640,647, 5,594,809. (More typically, digital watermarks are steganographic - that is, they are essentially imperceptible to human vision, serving to hide the embedded data before the viewer's eyes.)

Most of the work in watermarking, however, is not in the patent literature but rather in published research. In addition to the patentees of the foregoing patents, some of the other workers in this field (whose watermark-related writings can by found by an author search in the INSPEC database) include I. Pitas, Eckhard Koch, Jian Zhao, Norishige Morimoto, Laurence Boney, Kineo Matsui, A.Z. Tirkel, Fred Mintzer, B. Macq, Ahmed H. Tewfik, Frederic Jordan, Naohisa Komatsu, and Lawrence O'Gorman.

In Szepanski, *A Signal Theoretic Method for Creating Forgery-Proof Documents for Automatic Verification*, 1979 Carnahan Conference on Crime Countermeasures, the author noted that overprinting of documents (e.g. money bills) with complicated line patterns is a deterrent against forgery, but does not convey meaningful information usable in an automatic verification procedure. He thus proposed superimposing a pattern representing plural bit data onto a document instead. The document is partitioned into as many square regions as there we data bits to be represented, and a carrier pattern is chosen. In regions corresponding to a "1" bit, the carrier pattern is added to the underlying document samples; in regions corresponding to a "0" bit, the pattern is subtracted. An automatic verification procedure can then be employed to scan the document, correlate the scan data with the carrier pattern, and extract the digital data. The author particularly considers passports in which the passport photograph is so processed to convey the owner's name and date of birth.

The artisan is assumed to be familiar with the foregoing prior art.

In the present disclosure it should be understood that references to watermarking encompass not only the assignee's watermarking technology, but can likewise be practiced with any other watermarking technology, such as those indicated above.

Watermarking can be applied to myriad forms of information. The present disclosure focuses on its applications to banknotes, travelers checks, passports, stock certificates, and the like (hereafter collectively referred to as "security documents"), which are generally characterized by use of line art imagery. However, it should be recognized that the principles discussed below can also be applied outside this particular field.

Most of the prior art in image watermarking has focused on pixelated imagery (e.g. bit-mapped images, JPEG/MPEG imagery, VGA/SVGA display devices, etc.). In most watermarking techniques, the luminance or color values of component pixels are slightly changed to effect subliminal encoding of binary data through the image. (This encoding can be done directly in the pixel domain, or in another domain, such as the DCT domain.) In some systems, isolated pixels are changed in accordance with one or more bits of the binary data; in others, plural domain-related groupings of pixels (e.g. locally adjoining, or corresponding to a given DCT component) are so changed. In all cases, however, pixels have served as the ultimate carriers of the embedded data.

While pixelated imagery is a relatively recent development, line art goes back centuries. One familiar example is U.S. paper currency. On the one dollar banknote, for example, line art is used in several different ways. One is to form intricate webbing patterns around the margin of the note (generally comprised of light lines on dark background). Another is to form grayscale imagery, such as the portrait of George Washington (generally comprised of dark lines on a light background).

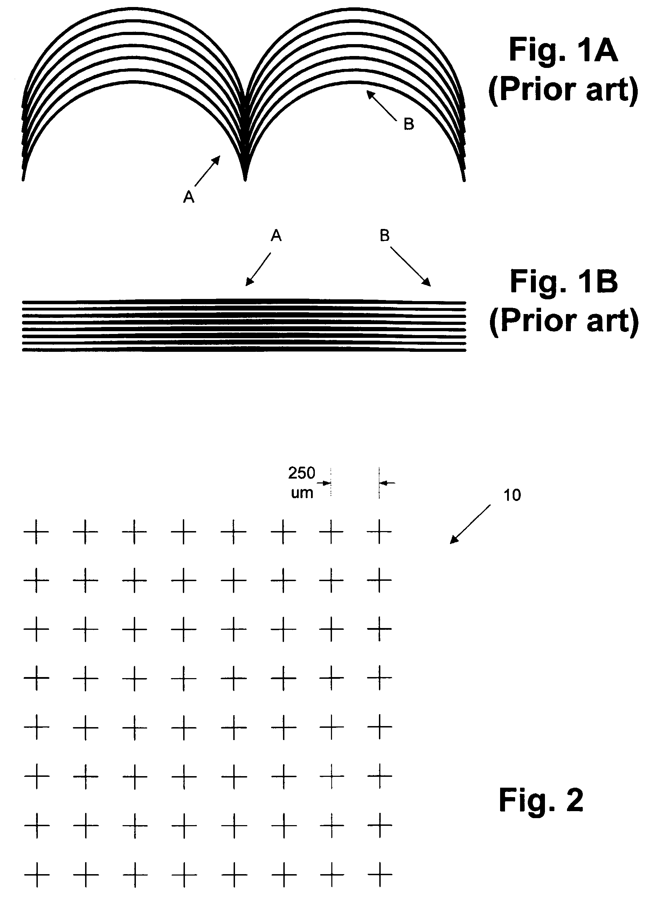

There are two basic ways to simulate grayscales in line art. One is to change the relative spacings of the lines to effect a lightening or darkening of an image region. Fig. 1A shows such an arrangement; area B looks darker than area A due to the closer spacings of the component lines. The other technique is to change the widths of the component lines -- wider lines resulting in darker areas and narrower lines resulting in lighter areas. Fig. 1B shows such an arrangement. Again, area B looks darker than area A, this time due to the greater widths of the component lines. These techniques are often used together.

In accordance with one aspect of the invention, security of a banknote (or other security document) is enhanced by marking its face with machine readable, generally imperceptible digital data by slightly altering the distribution of ink on the face of the banknote. The digital data can comprise plural bits, and may be encoded redundantly across the banknote (rather than marking the banknote at a single, localized region only.) The encoding can make use of a code signal or a discrete cosine transform. Two watermarks can advantageously be used in some embodiments, in which case these may be encoded with different robustness, or in accordance with different code signals. Some such banknotes may be provided with holograms as well, to further increase security.

In accordance with another aspect of the invention, a banknote (or other security document) is encoded with plural-bit digital data so as to facilitate its later machine identification. This may be accomplished by receiving initial banknote artwork together with the plural-bit digital data. A pattern of data is next produced, in which the digital data is encoded. The initial artwork is then adjusted in accordance with this data, and the banknote is printed using the adjusted artwork. Again, the arrangement desirably effects a spatial spreading of the plural bits throughout the banknote.

One such embodiment posits a virtual grid of points imposed on a line art image, with the points spaced at regular intervals in vertical and horizontal directions. (The horizontal and vertical intervals need not be equal.) The virtual points may be imposed over some or all of the bill at equal vertical and horizontal spacings of 250 µm. In regions of the banknote having line art, the component lines of the line art snake in and amongst these virtual grid points.

Each grid point is considered to be the center of a corresponding region. The luminance of the region is a function of the proximity of any line(s) within the boundary of the region to the region's center point, and the thickness of the line(s).

To change the luminance of the region, the contour of the line(s) is changed slightly within the region. In particular, the line is made slightly thicker to decrease luminance; or thinner to increase luminance. (In this example, dark lines on light backgrounds are presumed.) The ability to effect these slight changes is then employed, in accordance with known pixelation-based watermarking techniques, to encode binary data in the line art. If such a banknote is thereafter scanned by a scanner, the values of the pixel data produced by the scanner will reflect the foregoing alterations in luminance values, permitting embedded watermark data to be decoded.

In an alternative embodiment, the line widths are not changed. Instead, the positions of the lines are shifted slightly towards or away from certain virtual grid points to effect an increase or decrease in the corresponding area's luminosity, with the same effect.

In accordance with another aspect of the present invention, reproduction of a banknote (or other security document) is deterred by encoding the banknote with plural bit digital data. Sampled image data corresponding to such a banknote is thereafter provided, and analyzed to detect the presence of the digital data therein. If such data is detected, an appropriate intervention action is taken.

In one such embodiment, the sampled image data is also analyzed to detect the presence of a visible structure characteristic of a banknote. The intervention action can be triggered on the detection on both, or either, of the visible structure and/or the digital data.

The interventions can include preventing reproduction of the image data, sending a message to a remote location to report processing of banknote data, or inserting forensic tracing data in the image data.

In accordance with another aspect of the invention, reproduction of a banknote (or other security document) is deterred by examining suspect image data corresponding to the sampled optical luminance of an object, and determining whether the suspect image data corresponds to a banknote. Both of these operations are performed at a first site. If the suspect image data corresponds to a banknote, then a second, remote site is contacted and a report is sent regarding detection of banknote-related data.

In accordance with another aspect of the invention, output from the printer of a personal computer system is marked to permit its later identification. This method includes receiving (or intercepting) printer data being sent from the personal computer to the printer; and digitally watermarking this data with a machine readable, generally imperceptible, digital watermark (desirably spread throughout the printer data). This watermark serves to mark the printer data as having been printed by that particular printer, permitting the resultant document to be matched with that printer.

In accordance with another aspect of the invention, an apparatus for processing (e.g. recognizing or validating) a banknote (or other security document) includes an optical scanner for producing image data corresponding to a note input to the apparatus, and a processor for detecting plural-bit digital watermark data within the image data. The detection of such watermark data indicates that the note is a banknote. If the watermark data is detected, a control unit responds in a first manner to change or limit the apparatus's operation (e.g. by halting reproduction, inserting forensic tracer information in output data, alerting a remote site or service, etc.). If the watermark data is not detected, the control unit responds in a second, different, manner. Scanners, photocopiers, and printers are examples of apparatuses that can employ such banknote-aware arrangements.

In accordance with another aspect of the invention, a cash processing apparatus includes an input for receiving plural banknote bills, and a feed mechanism for conveying bills from the input past an optical detector. The optical detector produces digital image data corresponding to the conveyed bills. This image data is then processed by a processor, which detects plural-bit digital watermark data steganographically encoded in artwork on at least certain of said banknotes. A control unit responds in a manner dependent on the detected watermark data.

The foregoing and other features and advantages of the invention will be more readily apparent from the following detailed description, which proceeds with reference to the accompanying drawings.

### Brief Description of the Drawings

Figs. 1A and 1B show prior art techniques for achieving grayscale effects using line art.
Fig. 2 shows a virtual array of grid points that can be imposed on an image according to one embodiment of the present invention.
Fig. 3 shows a virtual array of regions that can be imposed on an image according to the Fig. 2 embodiment.
Fig. 4 shows an excerpt of Fig. 3 with a line from a line art image passing therethrough.
Fig. 5 shows changes to the width of the line of Fig. 3 to effect watermark encoding according to one embodiment of the present invention.
Fig. 6 shows changes to the position of the line of Fig. 3 to effect watermark encoding according to another embodiment of the present invention.
Fig. 7 is a block diagram of a photocopier according to another embodiment of the invention.
Fig. 8 shows part of an automatic teller machine employing principles of the present invention.
Fig. 9 shows part of a device (e.g. a photocopier, scanner, or printer) employing principles of the present invention.
Fig. 10 shows part of a device (e.g. a photocopier, scanner, or printer) employing principles of the present invention.

### Detailed Description

Referring to Fig. 2, an illustrative form of the invention employs a grid 10 of imaginary reference points arrayed over a line art image. The spacing between points is 250 µm in the illustrated arrangement, but greater or lesser spacings can of course be used.

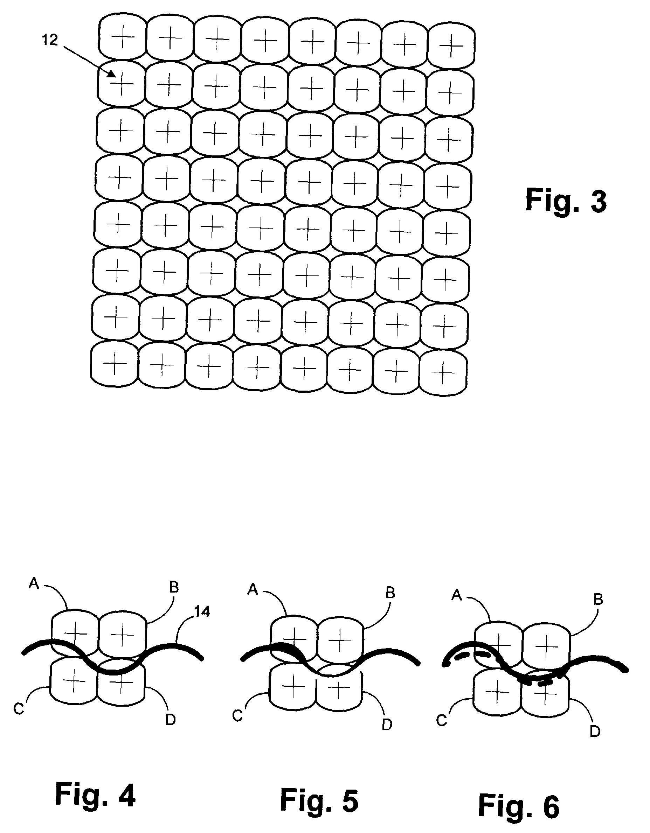

Associated with each grid point is a surrounding region 12, shown in Fig. 3. As described below, the luminosity (or reflectance) of each of these regions 12 is slightly changed to effect the subliminal encoding of binary data.

Region 12 can take various shapes; the illustrated rounded-rectangular shape is representative only. (The illustrated shape has the advantage of encompassing a fairly large area while introducing fewer visual artifacts than, e.g., square regions.) In other embodiments, squares, rectangles, circles, ellipses, etc., can alternatively be employed.

Fig. 4 is a magnified view of an excerpt of Fig. 3, showing a line 14 passing through the grid of points. The width of the line, of course, depends on the particular image of which it is a part. The illustrated line is about 25 µm in width; greater or lesser widths can naturally be used.

In a first embodiment of the invention, shown in Fig. 5, the width of the line is controllably varied so as to change the luminosity of the regions through which it passes. To increase the luminosity (or reflectance), the line is made narrower (i.e. less ink in the region). To decrease the luminosity, the line is made wider (i.e. more ink).

Whether the luminance in a given region should be increased or decreased depends on the particular watermarking algorithm used. Any algorithm can be used, by changing the luminosity of regions 12 as the algorithm would otherwise change the luminance or colors of pixels in a pixelated image. (Some watermarking algorithms effect their changes in a transformed domain, such as DCT, wavelet, or Fourier. However, such changes are ultimately manifested as changes in luminance or color.)

In an exemplary algorithm, the binary data is represented as a sequence of -1s and 1s, instead of 0s and 1s. (The binary data can comprise a single datum, but more typically comprises several. In an illustrative embodiment, the data comprises 100 bits - some of which are error-correcting or -detecting bits.)

Each element of the binary data sequence is then multiplied by a corresponding element of a pseudo-random number sequence, comprised of -1s and 1s, to yield an intermediate data signal. Each element of this intermediate data signal corresponds to a respective sub-part of the image, such as a region 12. Collectively, these elements form a pattern of binary data. (Typically each element of the intermediate data signal is mapped to several of the regions.)

The image in (and optionally around) each such region is analyzed to determine its relative capability to conceal embedded data, and a corresponding scale factor is produced. Exemplary scale factors may range from 0 to 3. The scale factor for the region is then multiplied by the element of the intermediate data signal corresponding to (i.e. mapped to) the region in order to yield a "tweak" (or "bias") value for the region. In the illustrated case, the resulting tweaks can range from -3 to 3. Collectively, these elements form a pattern of gray-scaled data.

The luminosity of the region on the banknote is then adjusted in accordance with the corresponding tweak value. A tweak value of -3 may correspond to a -5% change in luminosity; -2 may correspond to -2% change; -1 may correspond to -1% change; 0 may correspond to no change; 1 may correspond to +1% change; 2 may correspond to +2% change, and 3 may correspond to +5% change. (This example follows the basic techniques described in the Real Time Encoder embodiment disclosed in patent 5,710,834.)

In Fig. 5, the watermarking algorithm determined that the luminance of region A should be reduced by a certain percentage, while the luminance of regions C and D should be increased by certain percentages.

In region A, the luminance is reduced by increasing the line width. In region D, the luminance is increased by reducing the line width; similarly in region C (but to a lesser extent).

No line passes through region B, so there is no opportunity to change the region's luminance. This is not fatal to the method, however, since the exemplary watermarking algorithm redundantly encodes each bit of data in sub-parts spaced throughout the line art image.

The changes to line widths in regions A and D of Fig. 5 are exaggerated for purposes of illustration. While the illustrated variance is possible, most implementations will typically modulate the line width 3 - 50% (increase or decrease).

(Many watermarking algorithms routinely operate within a signal margin of about +/- 1% changes in luminosity to effect encoding. That is, the "noise" added by the encoding amounts to just 1% or so of the underlying signal. Lines typically don't occupy the full area of a region, so a 10% change to line width may only effect a 1% change to region luminosity, etc. Banknotes are different from photographs in that the artwork generally need not convey photorealism. Thus, banknotes can be encoded with higher energy than is used in watermarking photographs, provided the result is still aesthetically satisfactory. To illustrate, localized luminance changes on the order of 10% are possible in banknotes, while such a level of watermark energy in photographs would generally be considered unacceptable. In some contexts, localized luminance changes of 20, 30, 50 or even 100% are acceptable.)

In the illustrated embodiment, the change to line width is a function solely of the tweak to be applied to a single region. Thus, if a line passes through any part of a region to which a tweak of 2% is to be applied, the line width in that region is changed to effect the 2% luminance difference. In variant embodiments, the change in line width is a function of the line's position in the region. In particular, the change in line width is a function of the distance between the region's center grid point and the line's closest approach to that point. If the line passes through the grid point, the full 2% change is effected. At successively greater distances, successively less change is applied. The manner in which the magnitude of the tweak changes as a function of line position within the region can be determined by applying one of various interpolation algorithms, such as the bi-linear, bi-cubic, cubic splines, custom curve, etc.

In other variant embodiments, the change in line width in a given region is a weighted function of the tweaks for adjoining or surrounding regions. Thus, the line width in one region may be increased or decreased in accordance with a tweak value corresponding to one or more adjoining regions.

Combinations of the foregoing embodiments can also be employed.

In the foregoing embodiments, it is sometimes necessary to trade-off the tweak values of adjoining regions. For example, a line may pass along a border between regions, or pass through the point equidistant from four grid points ("equidistant zones"). In such cases, the line may be subject to conflicting tweak values -- one region may want to increase the line width, while another may want to decrease the line width. (Or both may want to increase the line width, but differing amounts.) Similarly in cases where the line does not pass through an equidistant zone, but the change in line width is a function of a neighborhood of regions whose tweaks are of different values. Again, known interpolation functions can be employed to determine the weight to be given the tweak from each region in determining what change is to be made to the line width in any given region.

In the exemplary watermarking algorithm, the average change in luminosity across the image is zero, so no generalized lightening or darkening of the image is apparent. The localized changes in luminosity are so minute in magnitude, and localized in position, that they are essentially invisible (e.g. inconspicuous/subliminal) to human viewers.

An alternative embodiment is shown in Fig. 6, in which line position is changed rather than line width.

In Fig. 6 the original position of the line is shown in dashed form, and the changed position of the line is shown in solid form. To decrease a region's luminosity, the line is moved slightly closer to the center of the grid point; to increase a region's luminosity, the line is moved slightly away. Thus, in region A, the line is moved towards the center grid point, while in region D it is moved away.

It will be noted that the line on the left edge of region A does not return to its nominal (dashed) position as it exits the region. This is because the region to the left of region A also is to have decreased luminosity. Where possible, it is generally preferable not to return a line to its nominal position, but instead permit shifted lines to remain shifted as they enter adjoining regions. So doing permits a greater net line movement within a region, increasing the embedded signal level.

Again, the line shifts in Fig. 6 are somewhat exaggerated. More typical line shifts are on the order of 3 - 50 µm.

One way to think of the Fig. 6 embodiment is to employ a magnetism analogy. The grid point in the center of each region can be thought of as a magnet. It either attracts or repels lines. A tweak value of -3, for example, may correspond to a strong-valued attraction force; a tweak value of +2 may correspond to a middle-valued repulsion force, etc. In Fig. 6, the grid point in region A exhibits an attraction force (i.e. a negative tweak value), and the grid point in region D exhibits a repulsion force (e.g. a positive tweak value).

The magnetic analogy is useful because the magnetic effect exerted on a line depends on the distance between the line and the grid point. Thus, a line passing near a grid point is shifted more in position than a line near the periphery of the region.

(Actually, the magnetism analogy can serve as more than a conceptual tool. Instead, magnetic effects can be modeled in a computer program and serve to synthesize a desired placement of the lines relative to the grid points. Arbitrarily customized magnetic fields can be used.)

Each of the variants discussed above in connection with Fig. 5 is likewise applicable to Fig. 6.

Combinations of the embodiments of Figs. 5 and 6 can of course be used, resulting in increased watermark energy, better signal-to-noise ratio and, in many cases, less noticeable changes.

In still a further embodiment, the luminance in each region is changed while leaving the line unchanged. This can be effected by sprinkling tiny dots of ink in otherwise-vacant parts of the region. In high quality printing, of the type used with banknotes, droplets on the order of 3µm in diameter can be deposited. (Still larger droplets are still beyond the perception threshold for most viewers.) Speckling a region with such droplets (either in a regular array, or random, or according to a desired profile such as Gaussian), can readily effect a 1% or so change in luminosity. (Usually dark droplets are added to a region, effecting a decrease in luminosity. Increases in luminosity can be effected by speckling with a light colored ink, or by forming light voids in line art otherwise present in a region.) (Actually, production realities often mean that many such microdots will not print, but statistically some will.)

In a variant of the speckling technique, very thin mesh lines can be inserted in the artwork -- again to slightly change the luminance of one or more regions (so-called "background tinting").

To decode watermark data, the encoded line art image must be converted into electronic form for analysis. This conversion is typically performed by a scanner.

Scanners are well known, so a detailed description is not provided here. Suffice it to say that scanners conventionally employ a line of closely spaced photodetector cells that produce signals related to the amount of the light reflected from successive swaths of the image. Most inexpensive consumer scanners have a resolution of 300 dots per inch (dpi), or a center to center spacing of component photodetectors of about 84 µm. Higher quality scanners of the sort found in most professional imaging equipment and photocopiers have resolutions of 600 dpi (42µm), 1200 dpi (21µm), or better.

Taking the example of a 300 dpi scanner (84 µm photodetector spacing), each 250 µm region 12 on the banknote will correspond to about a 3 x 3 array of photodetector samples. Naturally, only in rare instances will a given region be physically registered with the scanner so that nine photodetector samples capture the luminance in that region, and nothing else. More commonly, the line art is skewed with respect to the scanner photodetectors, or is longitudinally misaligned (i.e. some photodetectors image sub-pans of two adjoining regions). However, since the scanner oversamples the regions, the luminance of each region can unambiguously be determined.

In one embodiment, the scanned data from the line art is collected in a two dimensional array and processed -- according to one of the techniques disclosed in my prior patents and applications -- to analyze the statistics of the data (using the techniques disclosed in my prior writings) to extract the bits of the embedded data.

(Again, the reference to my earlier watermark decoding techniques is exemplary only. Once scanning begins and the data is available in pixel form, it is straightforward to apply any other watermark decoding technique to extract a correspondingly-encoded watermark.)

In a variant embodiment, the scanned data is not assembled in a complete array prior to the processing. Instead, it is processed in real-time, as it is generated, in order to detect embedded watermark data without delay. (Depending on the parameters of the scanner, it may be necessary to scan a half-inch or so of the line art image before the statistics of the resulting data unambiguously indicate the presence of a watermark.)

In accordance with another aspect of the invention, various hardware devices are provided with the capability to recognize embedded watermark data in any line art images they process, and to respond accordingly.

One example is a color photocopier. Such devices employ a color scanner to generate sampled (pixel) data corresponding to an input media (e.g. a dollar bill). If watermark data associated with a banknote is detected, the photocopier can take one or more steps.

One option is simply to interrupt copying, and display a message reminding the operator that it is illegal to reproduce currency.

Another option is to contact a remote service or site, and report the attempted reproduction of a banknote. Photocopiers with telephone dial-out capabilities are known in the art (e.g. patent 5,305,199) and are readily adapted to this purpose. Similarly, personal computers with modems or network communication capabilities can send a message to a remote location alerting of the attempted reproduction (e.g. over the internet). The remote service can be an independent service, or can be a government agency.

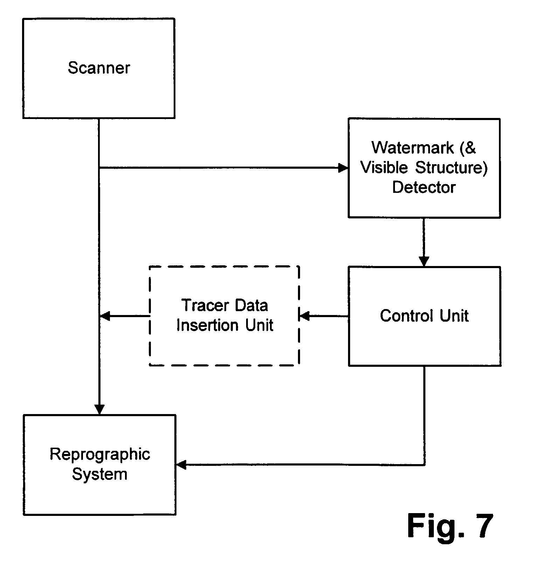

Yet another option is to permit the copying, but to insert forensic tracer data in the resultant copy. This tracer data can take various forms. Steganographically encoded binary data is one example; the data embedding shown in patent 5,568,268 can also be used. The tracer data can memorialize the serial number of the machine that made the copy and/or the date and time the copy was made. To address privacy concerns, such tracer data is not normally inserted in photocopied output, but is so inserted only when the subject being photocopied is detected as being a banknote. (Such an arrangement is shown in Fig. 7.)

Desirably, the scan data is analyzed on a line-by-line basis in order to identify illicit photocopying with a minimum of delay. If a banknote is scanned, one or more lines of scanner output data may be provided to the photocopier's reprographic unit before the banknote detection decision has been made. In this case the photocopy will have two regions: a first region that is not tracer-marked, and a second, subsequent region in which the tracer data has been inserted.

Another hardware device tat can employ the foregoing principles is a standalone scanner. A programmed processor (or dedicated hardware) inside the scanner analyzes the data being generated by the device, and responds accordingly.

Yet another hardware device that can employ the foregoing principles is a printer. A processor inside the device analyzes graphical image data to be printed, looking for watermarks associated with banknotes.

For both the scanner and printer devices, response strategies can include disabling operation, or inserting tracer information. (Such devices typically do not have dial-out capabilities or network connections, although such capabilities of a conventional computer can be invoked by a scanner or printer device using known techniques, if desired.)

Again, it is desirable to process the scanner or printer data as it becomes available, so as to detect any banknote processing with a minimum of delay. Again, there will be some lag time before a detection decision is made. Accordingly, the scanner or printer output will be comprised of two parts, one without the tracer data, and another with the tracer data.

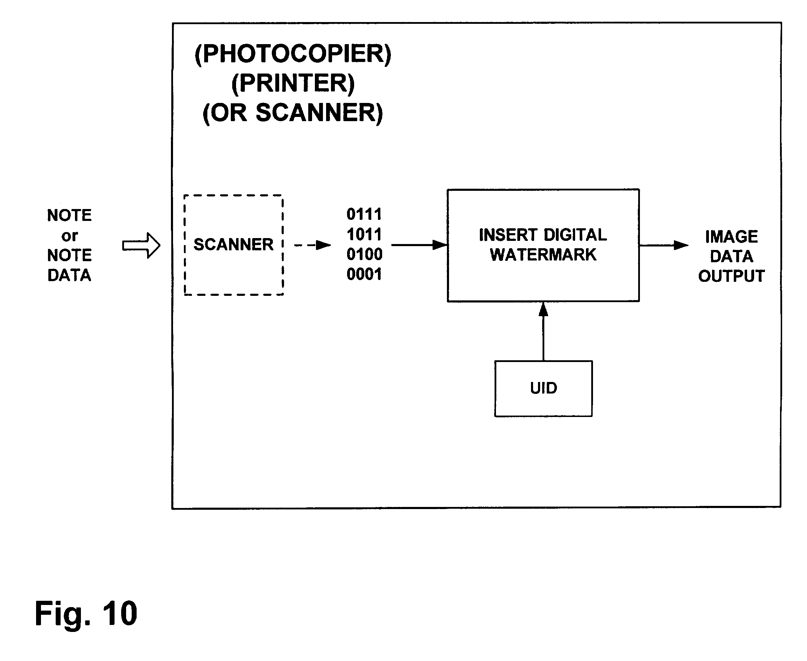

In another embodiment (Fig. 10) an imperceptible watermark having a universal ID (UID) is inserted into all documents printed with a printer, scanned with a scanner, or reproduced by a photocopier. The UID is associated with the particular printer/photocopier/scanner in a registry database maintained by the products' manufacturers. The manufacturer can also enter in this database the name of the distributor to whom the product was initially shipped. Still further, the owner's name and address can be added to the database when the machine is registered for warranty service. While not preventing use of such machines in counterfeiting, the embedded UID facilitates identifying the machine that generated a counterfeit banknote. (This is an application in which a private watermark might best be used.)

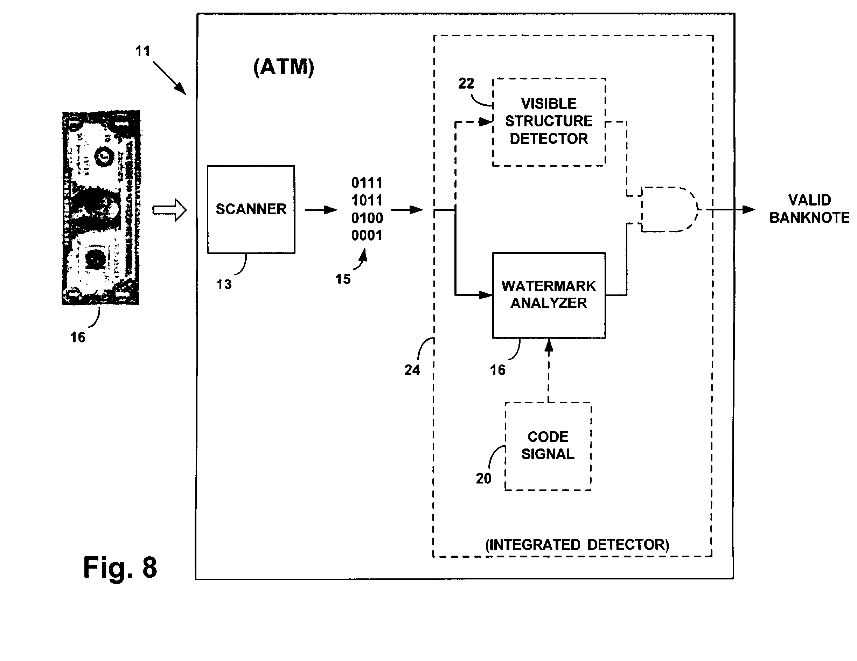

Another advantageous use of digital watermarks is in high-confidence authentication of banknotes for, e.g., automatic teller machines that both accept -- as well as dispense -- cash. Referring to Fig. 8, such a machine (11) is provided with a known optical scanner (13) to produce digital data (15) corresponding to the face(s) of the bill (16). This image set (14) is then analyzed (16) to extract embedded watermark data. In watermarking technologies that require knowledge of a code signal (20) for decoding (e.g. noise modulation signal, crypto key, spreading signal, etc.), a bill may be watermarked in accordance with several such codes. Some of these codes are public - permitting their reading by conventional machines. Others are private, and are reserved for use by government agencies and the like. (*C.f.* public and private codes in the present assignee's issued patents.)

As noted, banknotes presently include certain visible structures, or markings (e.g., the seal emblem noted in the earlier-cited patents), which can be used as aids to note authentication (either by visual inspection or by machine detection). Desirably, a note is examined by an integrated detection system (24), and confirms the presence of both the visible structures (22) and the digitally watermarked data before concluding that a banknote is genuine.

Visible banknote structures can be sensed using known pattern recognition techniques. Examples of such techniques are disclosed in U.S. Patents 5,321,773, 5,390,259, 5,533,144, 5,539,841, 5,583,614, 5,633,952, 4,723,149 and 5,424,807 and laid-open foreign application EP 766,449.

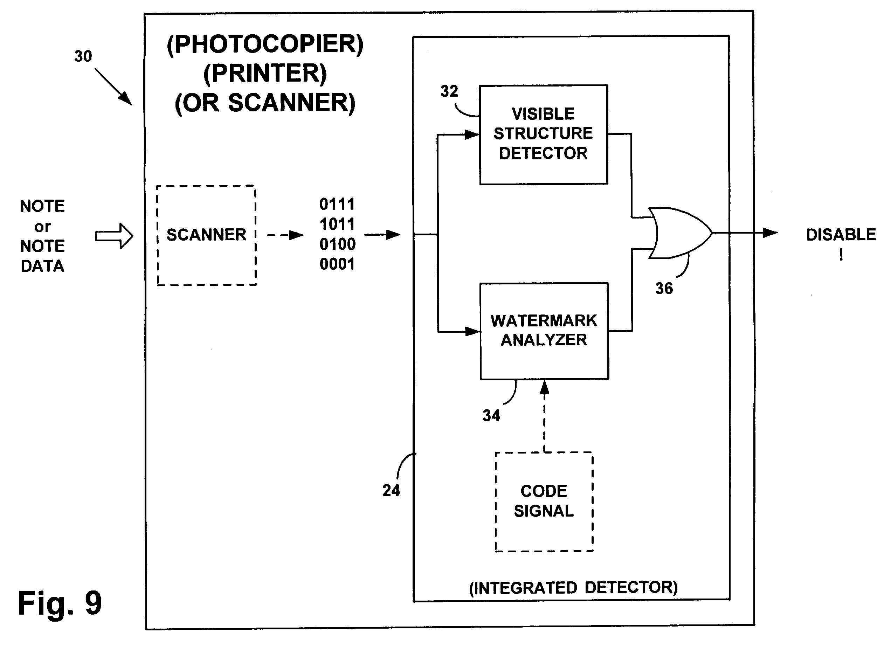

Referring to Fig. 9, a photocopier (30), for example, can sense the presence of either a visible structure (32) or embedded banknote watermark data (34), and disable copying if either is present (36). Scanners and printers can be equipped with a similar capability - analyzing the data scanned or to be printed for either of these banknote hallmarks. If either is detected, the software (or hardware) disables further operation.

Identification of banknotes by watermark data provides an important advantage not otherwise available. As noted, an original bill can be doctored (e.g. by white-out, scissors, or less crude techniques) to remove/obliterate the visible structures. Such a document can then be freely copied on either a visible structure-sensing photocopier or scanner/printer installation. The removed visible structure can then be added in via a second printing/photocopying operation. If the printer is not equipped with banknote-disabling capabilities, image-editing tools can be used to insert visible structures back into image data sets scanned from such doctored bills, and the complete bill freely printed. By additionally including embedded watermark data in the banknote, and sensing same, such ruses will not succeed.

(A similar ruse is to scan a banknote image on a non-banknote-sensing scanner. The resulting image set can then be edited by conventional image editing tools to remove/obliterate the visible structures. Such a data set can then be printed - even on a printer/photocopier that examines such data for the presence of visible structures. Again, the missing visible structures can be inserted by a subsequent printing/photocopying operation.)

Desirably, the visible structure detector and the watermark detector are integrated together as a single hardware and/or software tool. This arrangement provides various economies, e.g., in interfacing with the scanner, manipulating pixel data sets for pattern recognition and watermark extraction, electronically re-registering the image to facilitate pattern recognition/watermark extraction, issuing control signals (e.g. disabling) signals to the photocopier/scanner, etc.

While the foregoing applications disabled potential counterfeiting operations upon the detection of either a visible structure or watermarked data, in other applications, both criteria must be met before a banknote is recognized as genuine. Such applications typically involve the receipt or acceptance of banknotes, e.g. by ATMs as discussed above and illustrated in Fig. 8.

(To provide a comprehensive disclosure without unduly lengthening the following specification, applicants incorporate by reference the patent documents cited above.)

From the foregoing, it will be recognized that embodiments according to the present invention allow line art images to serve as subliminal carriers for binary data. Additionally, existing deterrents to banknote counterfeiting have been enhanced to prevent common work-arounds, and other advantages have been provided.

Having described and illustrated the principles of my invention with reference to several illustrative embodiments, it will be recognized that these embodiments are exemplary only and should not be taken as limiting the scope of my invention. Guided by the foregoing teachings, it should be apparent that other watermarking, decoding, and anti-counterfeiting technologies can be substituted for, and/or combined with, the elements detailed above to yield similar effects.

For example, while the invention has been described with reference to embodiments employing regular rectangular arrays of grid points, those skilled in the art will recognize that other arrays of points -- neither rectangular nor regular -- can alternatively be used.

Similarly, while the invention has been particularly illustrated with reference to banknotes, the principles thereof are equally applicable to other security documents.

While the invention has been described with reference to embodiments that scale the embedded energy in accordance with local image characteristics, in other embodiments a manually crafted energy profile can be implemented. That is, a mask defining embedded signal magnitudes at different parts of the image can be manually devised, and employed to tailor the change in luminance in each region.

Likewise, while one encoding technique has been particularly detailed, the invention is not so limited. Any technique for hiding plural-bit binary data in a security document, so that it can be detected from sampled optical data corresponding to the document, can likewise be employed. Not all such techniques involve slight alterations to the ink (e.g. color, density, distribution, etc.). For example, another approach is to digitally watermark the underlying medium (whether paper, polymer, etc.). This can be done by changing the microtopology of the medium (a la mini-Braille) to manifest the pattern of encoded data. Such texturing can be optically sensed and decoded using a an algorithm corresponding to the encoding algorithm that produced the patterned data. Another option is to employ a laminate on or within the banknote, where the laminate has the watermarking manifested thereon/therein. The laminate can be textured (as above), or its optical transmissivity can vary in accordance with a noise-like pattern that is the watermark, or a chemical property can similarly vary. Such approaches are detailed, e.g., in my laid-open PCT applications cited above.

While the invention has been particularly illustrated with reference to certain hardware devices (e.g. scanners, photocopiers, and printers), and certain applications (deterring counterfeiting, and banknote authentication), the technology is not so limited. For example, many different devices can be equipped with the banknote recognition capabilities detailed herein. One example is cash-accepting vending machines, which examine bills for authenticity. Another is personal computers, which can examine data processed thereby to determine whether same originated with a banknote, and to intervene as appropriate.

Still other applications can also be served by this technology as well. One is banknote processing, e.g. the devices used by banks and issuing authorities for counting, sorting, and reading banknotes, and culling from circulation certain aged and counterfeit banknotes. Such a device can include an input (e.g. hopper) for receiving plural banknote bills, and a feed mechanism for conveying bills from the input past an optical detector. The optical detector produces digital image data corresponding to the conveyed bills. This image data is then processed by a processor, which detects plural-bit digital watermark data steganographically encoded in artwork on at least certain of said banknotes. A control unit responds in a manner dependent on the detected watermark data. For example, the control unit can cause the device to sort bills by denomination or age, or cull counterfeits, based on the decoded data.

Moreover, it will be recognized that the methods of the invention can be performed by hardware, software, or by a combination (e.g. some image processing operations performed by dedicated hardware, with others performed in software).

In still other embodiments, at least part of a watermark can be printed using photoluminescent ink. This allows, e.g., a merchant presented with a banknote to quickly verify the presence of *some* watermark-like indicia in/on the bill even without resort to a scanner and computer analysis (e.g. by examining under a black light). Such photoluminescent ink can also print human-readable indicia on the bill, such as the denomination of a banknote. (Since ink-jet printers and other common mass-printing technologies employ cyan/magenta/yellow/black to form colors, they can produce only a limited spectrum of colors. Photoluminescent colors are outside their capabilities. Fluorescent colors - such as the yellow, pink and green dyes used in highlighting markers - can similarly be used and have the advantage of being visible without a black light.)

An improvement to the detailed, and other, encoding techniques is to add an iterative assessment of the robustness of the digital watermark, with a corresponding adjustment in a re-watermarking operation. Especially when encoding multiple bit watermarks, the characteristics of the underlying content (e.g. artwork) may result in some bits being more robustly (e.g. strongly) encoded than others. In an illustrative technique employing this improvement, a watermark is first encoded. Next, a trial decoding operation is performed. A confidence measure (e.g. signal-to-noise ratio) associated with each bit detected in the decoding operation is then assessed. The bits that appear weakly encoded are identified, and corresponding changes are made to the watermarking parameters to bring up the relative strengths of these bits. The object is then watermarked anew, with the changed parameters. This process can be repeated, as needed, until all of the bits comprising the encoded data are approximately equally detectable from the encoded object, or meet some predetermined signal-to-noise ratio threshold.

Banknotes, like most other media and objects, can generally benefit by use of multiple watermarks. For example, a banknote can be marked once in the spatial domain, and a second time in the spatial frequency domain. (It should be understood that any change in one domain has repercussions in the other. Here I reference the domain in which the change is directly effected.)

Another option is to mark a banknote (or other physical or digital object) with watermarks of two different levels of robustness, or strength. The more robust watermark withstands various types of corruption, and is detectable in the object even after multiple generations of intervening distortion. The less robust watermark can be made frail enough to fail with the first distortion of the object. In a banknote, for example, the less robust watermark serves as an authentication mark. Any scanning and reprinting operation will cause it to become unreadable. Both the robust and the frail watermarks should be present in an authentic banknote; only the former will be present in a counterfeit.

Still another option is to encode two different watermarks in accordance with two different code signals. One watermark can identify an apparatus used in an attempted counterfeiting operation (e.g. by serial number). The other watermark can be used for other purposes.

The foregoing discussion has addressed various technological fixes to various problems, particularly illustrated in connection with banknotes. Exemplary solutions have been detailed. Others will be apparent to the artisan by applying common knowledge to extrapolate from the solutions provided above.

For example, the technology and solutions disclosed herein have made use of elements and techniques known from the cited references. Other elements and techniques from the cited references can similarly be combined to yield further implementations within the scope of the present invention. Thus, for example, holograms with or without watermark data can be employed in banknotes for additional security; single-bit watermarking can commonly be substituted for multi-bit watermarking; technology described as using imperceptible watermarks can sometimes be practiced using visible watermarks (glyphs, etc.); local scaling of watermark energy can be provided to enhance watermark signal-to-noise ratio without increasing human perceptibility; various filtering operations can be employed for various functions; encoding may proceed at the granularity of a single pixel (or DCT coefficient), or may similarly treat adjoining groups of pixels (or DCT coefficients); the encoding can be optimized to withstand expected forms of content corruption. Etc., etc., etc. (The cited variants are generally all further detailed in my laid-open PCT applications.) Thus, the exemplary embodiments are only selected samples of the solutions available by combining the teachings referenced above. The other solutions necessarily are not exhaustively described herein, but are fairly within the understanding of an artisan given the foregoing disclosure and familiarity with the cited art.

In view of the many possible embodiments to which the principles of the invention may be put, it should be recognized that the detailed embodiments are illustrative only and should not be taken as limiting the scope of my invention. Rather, I claim as my invention all such embodiments as may come within the scope and spirit of the following claims and equivalents thereto.

The features disclosed in the foregoing description, in the claims and/or in the accompanying drawings may, both separately and in any combination thereof, be material for realising the invention in diverse forms thereof.

## Claims

1. A method of enhancing the security of a printed banknote, the method including marking the face of the banknote with machine readable, generally imperceptible data, the method characterized by selecting digital data with which the banknote is to be marked, and slightly altering the distribution of ink on the face of the banknote so as to effect encoding of said digital data.

2. The method of claim 1 in which the digital data comprises plural bits.

3. The method of claim 2 in which all of the plural bits are encoded redundantly across the banknote, rather than the banknote being marked a single localized region only.

4. The method of claim 1 in which the encoding makes use of a code signal.

5. The method of claim 1 in which the encoding makes use of a discrete cosine transform.

6. The method of claim 1 which includes encoding with two different digital watermarks.

7. The method of claim 6 in which the two different digital watermarks are of different robustness.

8. The method of claim 6 in which the two watermarks are encoded in accordance with different code signals.

9. The method of claim 1 which also includes providing the banknote with a hologram.

10. A method for encoding plural-bit digital data in a banknote, to facilitate later machine identification of the banknote, comprising:
generating a pattern of data in which the plural-bit digital data is encoded;
receiving initial banknote artwork;
adjusting the initial banknote artwork in accordance with said data; and
printing a banknote corresponding to said adjusted banknote artwork.

11. The method of claim 10 in which the initial banknote artwork includes line art, and the method includes slightly changing the positions of lines comprising said artwork to encode said plural-bit data.

12. The method of claim 11 that includes, for at least one line, changing its position in a first direction at a first region therealong, and changing its position in a second direction different than the first at a second region therealong.

13. The method of claim 10 in which the banknote artwork includes line art, and the method includes slightly changing the widths of lines comprising said artwork to encode said plural-bit data.

14. The method of claim 13 that includes, for at least one line, increasing its width in a first region, and decreasing its width in a second region.

15. The method of claim 10 that includes:
defining an array of regions spanning at least an excerpt of the initial banknote artwork; and
changing the artwork within plural of said regions to either increase or decrease the respective luminance of each.

16. The method of claim 15 in which the defining includes imposing a virtual grid over said excerpt.

17. The method of claim 10 that includes adjusting said original artwork by inserting one or more new lines therein.

18. A method of deterring reproduction of a banknote, comprising:
encoding the banknote with plural-bit digital data;
providing sampled image data corresponding to said banknote;
analyzing said image data to detect the digital data therein, said detection signifying that the image data likely corresponds to a banknote; and
intervening in response to detection of the digital data.

19. The method of claim 18 which includes encoding the banknote with said digital data across its surface, wherein the method cannot be defeated by obliterating localized markings characteristic of a banknote and thereafter reinserting such markings.

20. The method of claim 18 which further includes:
analyzing said image data to detect a visible structure characteristic of a banknote; and
intervening in response to detection of the visible structure;
wherein detection of either the visible structure or the digital data serves to trigger the intervention.

21. The method of claim 18 in which the intervening comprises preventing reproduction of the image data.

22. The method of claim 18 in which the intervening comprises sending a message to a remote location to signal processing of banknote data.

23. The method of claim 18 in which the intervening comprises inserting forensic tracing data in the image data.

24. The method of claim 22 in which the intervening comprises inserting first and second plural-bit digital watermarks in the image data, one of said watermarks serving to convey data identifying an apparatus involved in attempted reproduction of the banknote.

25. The method of claim 24 in which the first and second digital watermarks are of different robustness.

26. The method of claim 24 in which the first and second watermarks are encoded in accordance with different code signals.

27. A method of deterring reproduction of a banknote, comprising:
at a first site, examining suspect image data corresponding to the sampled optical luminance of an object;
determining at said first site whether said suspect image data corresponds to a banknote; and
if so, contacting a second site and reporting detection of banknote-related data.

28. A method of marking printer output from a personal computer system to permit its later identification, the system including at least a personal computer and a printer, the method comprising:
receiving printer data being sent from the computer to the printer;
encoding the printer data with a machine readable, generally imperceptible, digital watermark comprising plural bits of digital data, said digital watermark serving to mark the printer data as having been printed by said printer;
wherein a document printed by said printer bears said digital watermark, permitting the printer on which said document was printed to be identified.

29. An apparatus for validating a banknote comprising:
an optical scanner for producing image data corresponding to a note input to the apparatus;
a processor for detecting watermark data within the image data, the watermark data comprising plural digital bits, the detection of such watermark data indicating that the note is a banknote; and
a control unit that responds in a first manner if the processor detects watermark data within the image data, and that responds in a second, different, manner if the processor does not detect watermark data within the image data.

30. The apparatus of claim 29 in which the processor has an input through which a code signal is applied, the code signal being required for discerning the watermark data from the image data.

31. The apparatus of claim 29 in which:
the processor also analyzes the image data for a visible structure characteristic of a banknote; and
the control unit responds in the first manner only if both the watermark data and the visible structure are detected in the image data by the processor.

32. An automatic teller machine according to claim 31, said machine serving both to dispense and accept banknotes from users thereof.

33. Apparatus for detecting the attempted counterfeiting of banknotes, comprising:
a banknote having line art thereon;
a scanner for scanning the banknote; and
a steganographic watermark detector for decoding binary data encoded within the banknote line art and scanned by the scanner, the presence of said decoded binary data indicating the attempted counterfeiting of a banknote.

34. Apparatus according to claim 33, further comprising a control unit responsive to the decoded binary data for initiating insertion of tracer data in an output produced by the apparatus.

35. Apparatus according to claim 34 in which the tracer data includes data related to the date of copying.

36. Apparatus according to claim 34 in which the tracer data comprises a steganographic watermark.

37. Apparatus according to claim 34 in which there is a delay in said decoding so that, when scanning a banknote, the apparatus initially produces output not having the tracer data inserted therein, and said output thereafter includes the tracer data.

38. Apparatus for processing cash, comprising:
an input for receiving a plural banknote bills;
a feed mechanism for conveying bills from the input;
an optical detector for producing digital image data corresponding to bills conveyed thereby by the feed mechanism;
a processor for detecting plural-bit digital data steganographically encoded in artwork on at least certain of said banknotes; and
a control unit responsive to detection of said plural bit digital data.
